# EUROPEAN PATENT APPLICATION

(11) **EP 4 741 152 A1**
(43) Date of publication of application: **13.05.2026**
(21) Application number: 24211420.5
(22) Date of filing: 07.11.2024
(51) Int. Cl.: B32B 5/02, B32B 7/12, B32B 27/08, B32B 27/32, C08L 23/04, C08L 23/08

(54) **SEALABLE POLYPROPYLENE FIBC AND FIBC PARTS**

(71) Applicant: FPS Investments B.V., 1181 LE Amstelveen (NL)
(72) Inventor: Dogan, Afsin, Sancaktepe, Istanbul (TR)
(74) Representative: Meissner Bolte Partnerschaft mbB

(57) **Abstract**

Sealable fabric (1) for a flexible intermedia bulk container (FIBC) for receiving bulk material comprising a woven fabric (10) comprising polypropylene, a coating (20) comprising polypropylene and a sealable film (30) comprising sealable polypropylene, particularly sealable polypropylene resin.

## Description

The present invention relates to a sealable fabric and a Flexible Intermediate Bulk Container (FIBC) made of a sealable fabric.

A flexible intermedia bulk container (FIBC) or big bag is an industrial container made of flexible fabric designed for storing and transporting dry and/or flowable products e.g. sand, fertilizer or granules. A FIBC usually has a filling volume of about 1000 l - 1300 l and can be filled with approximately 1000 kg - 1500 kg.

A FIBC or big bag comprises a plurality of woven fabrics made of polypropylene. Such woven polypropylene fabrics comprise a high strength and are chemically inert. During manufacturing of a FIBC or a big bag the woven polypropylene fabrics are usually sewed together. However, the sewing reduces the strength of the woven polypropylene fabrics through the needle punctures and thus damaging of the fabric. In addition, sewing can result in leakage problems, contamination problems and is usually a time consuming, e.g. manual, process. A FIBC or big bag usually comprises an inner liner, e.g. comprising low density polyethylene (LDPE), to protect the filling product. The inner liner is typically fixed to the FIBC or big bag by adhesives or by using adhesive tapes. Depending on the filling conditions of the FIBC, the fixation of the inner liner can be separated and/or the handling the FIBC with the inner liner can be more difficult compared to a FIBC without an inner liner.

US 2014/0363106 A1 teaches an alternative method for producing a flexible polypropylene fabric wherein the polypropylene fabrics comprise a coated and an uncoated side. During manufacturing, the coated sides of two polypropylene fabrics are joined together by applying heat to the polypropylene fabrics.

It is an object of the invention to provide a sealable fabric for a FIBC having increased properties for manufacturing a FIBC and reducing contamination and leakage risks.

The problem is solved by a sealable fabric according to claim 1 and a Flexible Intermediate Bulk Container (FIBC) according to claim 14.

According to the invention, a sealable fabric for a flexible intermediate bulk container (FIBC) or big bag for receiving bulk material is provided. The sealable fabric comprises a woven fabric comprising polypropylene, in particular additionally sealable polypropylene, a coating comprising polypropylene, in particular additionally sealable polypropylene, and a sealable film comprising a sealable polypropylene, in particular sealable polypropylene resin. Hence, the sealable fabric is particularly formed by different layers, a first layer comprising the woven fabric, a second layer comprising the coating and a third layer comprising the sealable film.

Preferably, the coating is provided between the woven fabric and the sealable film to bond the woven fabric and the sealable film. The sealable film provides the effect that the sealable fabric can be sealed to another sealable fabric by means of a sealing technology. The sealable fabrics can in particular be sealed by applying heat to a sealing area of the sealable fabrics. Hence, a sewing operation can be eliminated. Due to the sealing process, the sealable fabric is not damaged providing a high strength of the joined sealable fabrics. Additionally, the main component of the sealable fabric is polypropylene. Hence, the whole sealable fabric can easily be recycled providing a high degree of sustainability. Particularly, the woven fabric is the load-bearing layer of the sealable fabric.

A sealable structure and/or material, in particular PP and/or PE, is in particular a structure/ material which can be sealed by applying a temperature of at least the melting point of the material, preferably plus at least 10 °C, further preferably plus at least 20 °C, and/or by applying a temperature of at least 80 °C, optionally at least 100 °C, further optionally at least 140 °C, further optionally at least 160 °C, further optionally at least 200 °C and/or less than 300 °C, optionally less than 200 °C. Most preferably, a temperature in a range between 100 °C - 200 °C is used for sealing.

The woven fabric is particularly manufactured of warp and weft yarns.

In an embodiment the woven fabric, in particular the yarns of the woven fabric, further comprises a sealable polypropylene, in particular sealable polypropylene resin, and/or colorant and/or protective additives. Due to the sealable polypropylene, the bonding strength between the different layers of the sealable fabric can be increased during the sealing process. The protective additives can comprise protection against ultraviolet (UV) radiation and/or against splitting of the woven fabric. The anti-splitting additives in particular comprise calcium carbonate. Hence, the lifetime of the sealable fabric is increased. Preferably, the woven fabric, in particular the yarn of the woven fabric, does not comprise polyethylene (PE).

In particular, the woven fabric, particularly the yarn of the woven fabric, comprises the following proportions of the components:
Polypropylene: 50 % - 70 %, preferably 60 % - 65 %; and/or
Anti-splitting additives: 2 % - 8 %, preferably 4 % - 6 %; and/or
Sealable polypropylene, in particular sealable polypropylene resin: 20 % - 40 %, preferably 25 % - 35 %; and/or
UV protective additives: 1 % - 2 %, preferably 1.25 % - 1.75 %; and/or
Colorant: 0.25 % - 0.75 %.

Due to the high amount of polypropylene, the woven fabric provides a high sustainability and can easily be recycled after its use.

In an embodiment, the woven fabric has a weight of 40 g/m²-300 g/m², in particular 55 g/m² - 250 g/m², preferably 75 g/m² - 235 g/m², providing a sufficient strength of the woven fabric.

In a further embodiment, the coating further comprises a sealable polypropylene, in particular a sealable polypropylene resin, and/or polyethylene, in particular linear low-density polyethylene (LLDPE). In particular, the coating comprises the following proportions of the components:
Polypropylene: 30 % - 60 %, preferably 40 % - 50 %; and/or
polyethylene, in particular linear low-density polyethylene (LLDPE): 2 % - 8 %, preferably 4 % - 6 %; and/or
sealable polypropylene resin: 35 % - 65 %, preferably 45 % - 55 %.

The coating preferably has a weight of 15 g/m² - 35 g/m², in particular 20 g/m² - 30 g/m².

In an embodiment, the sealable film further comprises polyethylene, in particular linear low-density polyethylene (LLDPE) and/or low-density polyethylene (LD-PE) and/or a low fluidity polypropylene heterophasic copolymer and/or a tie material and/or sealable polypropylene, e.g. sealable polypropylene being a C2/C4 terpolymer.

In particular, the sealable film comprises at least one first layer, e.g. an outer (outer most) layer, and/or at least one second layer, e.g. an internal layer, and/or at least one third layer, e.g. a tie (bonding) layer. The layers of the sealable film can provide different mechanical and chemical properties, which may be adapted to the planned use of the sealable fabric. The at least one first layer of the sealable film may particularly be adapted to the properties of adjacent layers, e.g. the coating and/or another sealable film and/or a sealable fabric, to provide a good bonding. The at least one second layer may preferably by adapted to increase the flexibility of the sealable film. The at least one third layer in particular increases the bonding between the second layer and the first layer. Preferably, the first layer surrounds the second layer and/or the third layer so that the first layer forms the outer surface of the sealable film.

In an embodiment, the first layer of the sealable film comprises at least 80 %, preferably at least 90 %, most preferably at least 98 %, sealable polypropylene, in particular sealable polypropylene being a C2/C4 terpolymer, and/or sealable polypropylene resin and/or low fluidity polypropylene heterophasic copolymer. In particular, the first layer contains substantially only sealable polypropylene, in particular sealable polypropylene resin. Hence, the bonding between the sealable film and a sealable film of another sealable fabric and/or the bonding to the coating may be increased.

In a further embodiment, the second layer comprises the polyethylene, in particular linear low-density polyethylene (LLDPE) and/or low-density polyethylene (LD-PE). Hence, the elasticity of the second layer and thus of the sealable film can be increased. Furthermore, the polyethylene components of the second layer may reduce the rigidity and/or increase the flexibility of the sealable film.

The third layer in particular comprises the tie material increasing the bonding between the second layer and the first layer. Preferably, the third layer is in between the first layer and the second layer.

Particularly, the sealable film is a coextruded film, so that the sealable film comprising the first layer and/or the second layer and/or the third layer may be manufactured in one single production step. The sealable film can also be considered as inner liner of regular FIBCs or big bags with barrier properties like a low density polyethylene (LDPE) liner.

The sealable film is in particular manufactured by a multilayer blown film method or line, preferably by a multilayer blown film coextrusion method or line, or different extrusion lines.

The sealable film may for example have a thickness of 30 µm - 160 µm, in particular of 30 µm - 75 µm, preferably of 35 µm - 45 µm.

The abovementioned problem is in particular solved by a Flexible Intermediate Bulk Container (FIBC) or big bag for receiving bulk material comprising at least one sheet of sealable fabric according to the invention. The sheets of sealable fabric form a leak-proof seamless or stitchless usable space or internal volume having at least one body fabric or side element and a bottom element. The at least one sheet of sealable fabric in particular forms the at least one body fabric and/or the bottom element and/or top element and/or a loop, e.g. handle, of the FIBC. Moreover, the at least one sheet of sealable fabric may be used for a filling spout, in particular attached to the top element, and/or a discharge spout, in particular attached to the bottom element, and/or inner baffles, in particular attached to at least one body fabric. Furthermore, the filling spout and/or the discharge spout may each comprise at least one tie for closing the discharge spout and/or filling spout. Furthermore, the at least one sheet of sealable fabric may be used for a skirt, that is in particular attached to the body fabric. Hence, a FIBC is provided wherein the sheets of sealable fabrics are joined without any sewing operation. Hence, leakage problems and/or contamination problems of the FIBC or big bag can be avoided. In addition, the manufacturing process is simplified.

Preferably, the at least one sheet of sealable fabric is sealed together in sealing areas, provided preferably along the edges of the FIBC. The fabrics are in particular sealed together by applying heat to the sealable film so that the sealable film melts. The heat is particularly applied heating elements or induction heating or ultrasound waves or laser radiation.

The sealable fabric can preferably be used for all components of the FIBC or big bag, or be used for at least 50 wt.-%, preferably at least 90 wt.-% of the FIPBC/big bag. Alternatively, the sealable fabric can be used for some components of the FIBC. The sealable fabric can in particular be used for the filling spout and/or the discharge spout and/or the at least one skirt and/or the at least one body fabric and/or the bottom element and/or top element and/or bottom body and/or a top body and/or a vertical seal of the filling spout and/or a vertical seal of the discharge spout and/or a round seal of filling spout to the top element and/or round seals of a discharge spout to the bottom element and/or a, e.g. inner, baffle to the side body.

The sealable fabric can furthermore or alternatively be used in particular for vertical seals of a filling spout and/or vertical seals of discharge spout and/or vertical seals of the skirt. Alternatively or additionally, the sealable fabric can be used for sealing or welding the filling spout to top element and/or sealing or welding the filling skirt to body element and/or sealing or welding the discharge spout to bottom element. Additionally or alternatively, the sealable fabric can be used for sealing or welding the top element and/or the bottom element to the body fabric. Moreover, the sealable fabric can preferably be used for sealing or welding the inner baffles to the body fabric.

The FIBC or big bag has a usable space or internal volume of about 750 l - 1500 l, preferably of about 1000 l - 1300 l. Particularly, the FIBC or big bag has a capacity of 750 kg - 1750 kg, preferably 950 kg - 1550 kg. The FIBC or big bag has in particular a weight of about 2 kg - 4 kg in an empty state.

The sealable fabric is in particular manufactured by the following manufacturing steps:
Producing a yarn, e.g. by a tape line, wherein the yarn preferably comprises components, in particular the proportions of the components, as delineated above.

Weaving the woven fabric from the yarn by use of a warp and weft technique.

Producing the sealable film by a multilayer blown film line, in particular by a multilayer blown film coextrusion line.

Coating the woven fabric and the sealable film to produce the sealable fabric.

Particularly, the percentages disclosed in the present application refer to the weight fraction or percentage per weight (wt.%). Hence, the percentages may refer to the mass of a component to the total mass of the mixture and/or layer and/or part.

The abovementioned problem is in particular solved by a method of manufacturing a Flexible Intermediate Bulk Container (FIBC) for receiving bulk material comprising providing at least one sheet of sealable fabric according to any one of the preceding claims, wherein the FIBC is formed by sealing the at least one fabric forming a leak-proof seamless usable space having at least one body fabric and a bottom element, preferably wherein sealing areas of the at least one sheet of sealable fabric are sealed together.

The above and further features and advantages of the invention will become more readily apparent from the following detailed description of preferred embodiments of the invention with reference to the accompanying drawings, in which like reference signs designate like features, and in which
- Fig. 1: is a schematic sectional view of a sealable fabric;
- Fig. 2: is a schematic view of a woven fabric;
- Fig. 3: is a schematic sectional view of a sealable film;
- Fig. 4: is a schematic view of a FIBC according to a first embodiment;
- Fig. 5: is a schematic view of a top element of the FIBC of Fig. 4;

- Fig. 6: is a schematic view of a bottom element of the FIBC of Fig. 4; and
- Fig. 7: is a schematic view of the inside of the FIBC of Fig. 4.

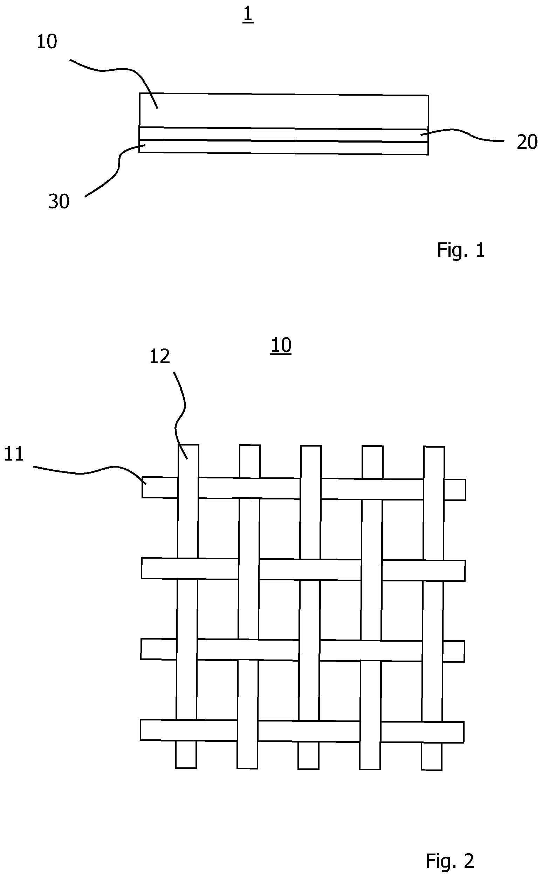

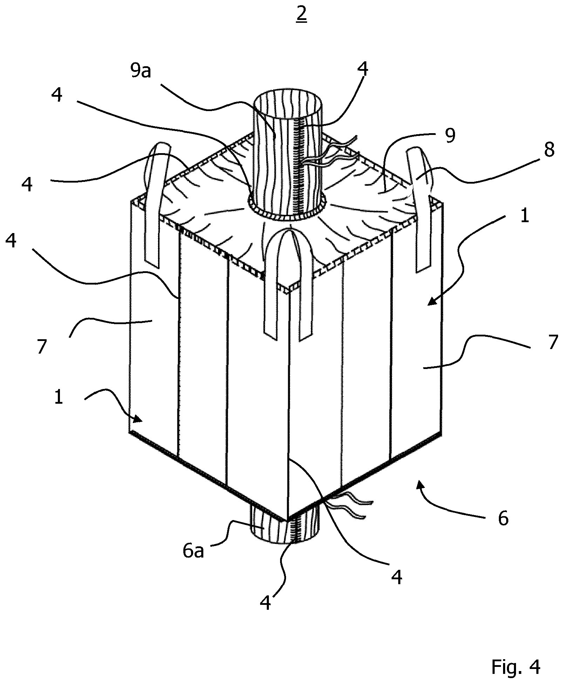

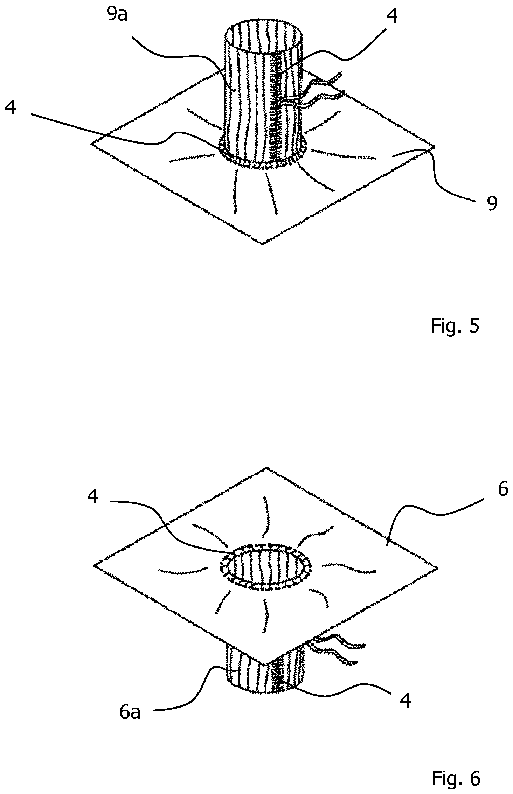

Fig. 1 depicts a sealable fabric 1 according to the invention. A plurality of sheets of the sealable fabric 1 are used to manufacture a Flexible Intermediate Bulk Container (FIBC) or big bag for receiving bulk material (Figs. 4 and 5).

The sealable fabric 1 comprises a woven fabric 10, a coating 20 and a sealable film 30. The woven fabric 10 forms a first layer, the coating 20 forms a second layer and the sealable film 30 forms a third layer of the sealable fabric. The coating 20, i.e. the second layer of the sealable fabric 1, is sandwiched in between the woven fabric 10, i.e. the first layer of the sealable fabric 1, and the sealable film 30, i.e. the third layer of the sealable fabric 1.

The woven fabric 10 and the coating 20 each comprise polypropylene and sealable polypropylene. The sealable film comprises sealable polypropylene. Due to the high amount of polypropylene of the coating 20, the bonding between the woven fabric 10 and the sealable film 30 is increased. Hence, delamination of the sealable fabric 1 is avoided.

The woven fabric 10 according to Fig. 2 comprises a plurality of warp yarns 12 and weft yarns 11. The warp yarns 12 and the weft yarns 11 are interlacing at substantially right angles. Hence, the woven fabric 10 comprises a high strength in the direction of the yarns 11, 12. Accordingly, the woven fabric 10 forms the load-bearing layer of the sealable fabric 1. The yarns 11, 12 are made out of a mixture comprising polypropylene, sealable polypropylene resin, colorant, anti-splitting additives and ultraviolet (UV) protective additives. Thus, yarns 11, 12 are particularly manufactured solely by polypropylene with only limited other components. Hence, yarns 11, 12 having a high strength and a high resistance against environmental effects are provided.

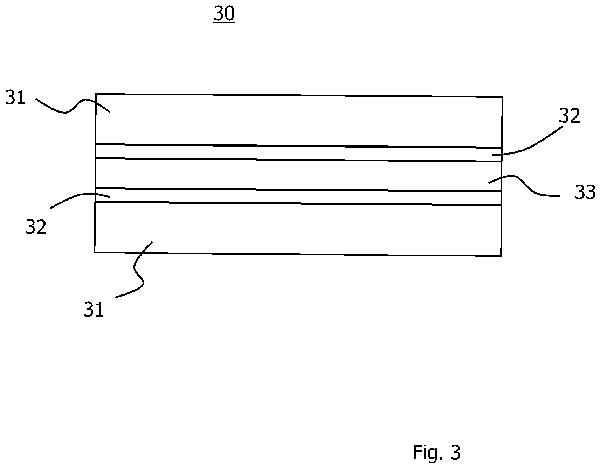

Fig. 3 depicts the sealable film 30. The sealable film 30 comprises two first layers 31, a second layer 33 and two third layers 32. The second layer 33 is in between the third layers 32. The third layers 32 and the second layer 33 are surrounded by the first layers 31 such that the third layers 32 and the second layer 33 are in between the first layers. Hence, the first layers 31 form the outer surface of the sealable film 30, so that the second layer 33 and/or the third layer 32 are not in contact with the surrounding. The first layer 31 substantially comprises solely sealable polypropylene, preferably sealable polypropylene resin, to increase the bonding with the woven fabric 10 and/or the coating 20.

The second layer 33 is an internal layer. The second layer 33 comprises linear low-density polyethylene (LLDPE) and/or low-density polyethylene (LD-PE). Due to the polyethylene components of the second layer 33 the rigidity of the sealable film 30 is reduced and/or the flexibility of the sealable film 30 is increased.

The first layers 31 and the second layer 33 are bonded together by use of the third layer 32, which is in between the first layer 31 and the second layer. The third layer 32 comprises a tie material to increase the bonding between the polypropylene of the first layer 31 and the polyethylene of the second layer 32. Hence, delamination or other rupture of the sealable film 30 can be avoided.

Fig. 4 shows a FIBC 2 or big bag according to a first embodiment of the invention. The FIBC 2 comprises a plurality of body fabrics 7 forming side walls of the FIBC 2, a bottom element 6 and a top element 9.

The FIBC 2 additionally comprises a filling spout 9a attached to the top element 9 of the FIBC 2 as depicted in Fig. 5.

Moreover, a discharge spout 6a is provided that is attached to the bottom element 6 of the FIBC 2 as shown in Fig. 6.

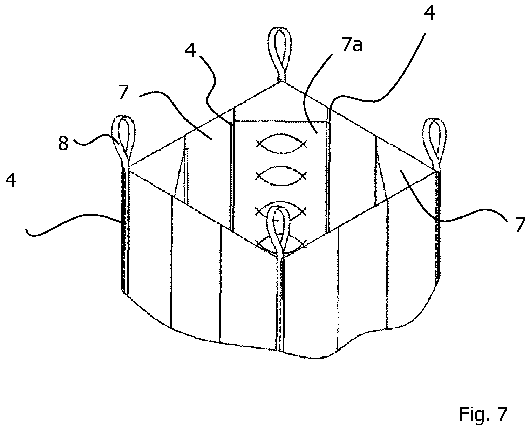

Additionally, inner baffles 7a are provided between two adjacent body fabrics 7 to increase the stability of the FIBC 2 and/or to give a formstable shape as depicted in Fig. 7.

Preferably, the body fabrics 7 and/or the bottom element 6 and/or the top element 9 and/or the discharge spout 6a and/or the filling spout 9a and/or the inner baffles 7a are made of the sealable fabric 1. Particularly, the whole FIBC 2 is made of the sealable fabric 1.

Hence, the components of the FIBC 2, i.e. the body fabrics 7 and/or the bottom element 6 and/or the top element 9 and/or the discharge spout 6a and/or the filling spout 9a and/or the inner baffles 7a can be sealed or welded together at sealable areas 4 as indicated in Fig. 4-7

The sealable films 30 of two components of the FIBC 2, e.g. the body fabrics 7 and the bottom element 6, are joined together by a sealing process using heat. To seal two sealable fabrics 1 together, the sealable films 30 of adjacent sealable fabrics 1 placed on each other. Then heat is applied to the sealing area 4, to melt the sealable film 30 of the adjacent sealable fabrics 1, so that the sealable films 30 of the sealable fabrics 1 melt together and form a tight and stable bonding. Hence, a FIBC 2 containing multiple sheets of sealable fabrics 1 can be manufactured without any sewing process increasing the strength of the FIBC 2.

### List of Reference signs

- 1: sealable fabric
- 2: FIBC
- 4: sealing area
- 5: opening
- 6: bottom element
- 6a: discharge spout
- 7: body fabric
- 7a: inner baffles
- 8: loop
- 9: top element
- 9a: filling spout
- 10: woven fabric
- 11: weft yarn
- 12: warp yarn
- 20: coating
- 30: sealable film
- 31: first layer
- 32: third layer
- 33: second layer

## Claims

1. Sealable fabric (1) for a flexible intermedia bulk container (FIBC) for receiving bulk material comprising:
a woven fabric (10) comprising polypropylene,
a coating (20) comprising polypropylene, and
a sealable film (30) comprising sealable polypropylene, particularly sealable polypropylene resin.

2. Sealable fabric (1) according to claim 1, wherein the woven fabric (10) further comprises:
sealable polypropylene, particularly sealable polypropylene resin, and/or colorant, and/or
protective additives.

3. Sealable fabric (1) according to claim 1 or 2, wherein the woven fabric (10) has a weight of 40 g/m² - 300 g/m², in particular 55 g/m² - 250 g/m², preferably 75 g/m² - 235 g/m².

4. Sealable fabric (1) according to any one of the preceding claims, wherein the coating (20) further comprises:
sealable polypropylene, particularly sealable polypropylene resin, and/or
polyethylene, in particular linear low-density polyethylene (LLDPE).

5. Sealable fabric (1) according to any one of the preceding claims, wherein the coating (20) has a weight of 15 g/m² - 35 g/m², in particular 20 g/m² - 30 g/m².

6. Sealable fabric (1) according to any one of the preceding claims, wherein the sealable film (30) further comprises:
polyethylene, in particular linear low-density polyethylene (LLDPE) and/or
low-density polyethylene (LD-PE), and/or
low fluidity polypropylene heterophasic copolymer, and/or
tie material.

7. Sealable fabric (1) according to any one of the preceding claims, wherein the sealable film (30) comprises at least one first layer (31) and/or at least one second layer (33) and/or at least one third layer (32).

8. Sealable fabric (1) according to claim 7, wherein the first layer (31) of the sealable film (30) comprises at least 80 %, preferably at least 90 %, most preferably at least 98 %, sealable polypropylene.

9. Sealable fabric (1) according to claim 6 and claim 7 or 8, wherein the second layer (33) comprises the polyethylene.

10. Sealable fabric (1) according to claims 7-9, wherein the first layer (31) and the second layer (33) are attached to each other by the third layer (32).

11. Sealable fabric (1) according to any one of the preceding claims, wherein the sealable film (30) is a coextruded film.

12. Sealable fabric (1) according to any one of the preceding claims, wherein the sealable film (30) is produced by a multilayer blown film method, in particular by a multilayer blown film coextrusion method.

13. Sealable fabric (1) according to any one of the preceding claims, wherein the sealable film (30) has a thickness of 30 µm - 160 µm, in particular of 30 µm - 75 µm, preferably of 35 µm - 45 µm.

14. Flexible Intermediate Bulk Container (FIBC) (3, 4) for receiving bulk material comprising
at least one sheet of sealable fabric (1) according to any one of the preceding claims forming a leak-proof seamless usable space having at least one body fabric (7) and/or a bottom element (6) and/or a top element (9), preferably wherein sealing areas (4) of the at least one sheet of sealable fabric (1) are sealed together.

15. Method of manufacturing a Flexible Intermediate Bulk Container (FIBC) (3, 4) for receiving bulk material comprising
providing at least one sheet of sealable fabric (1) according to any one of the preceding claims, wherein the FIBC is formed by sealing the at least one fabric (1) forming a leak-proof seamless usable space having at least one body fabric (7) and a bottom element (6), preferably wherein sealing areas (4) of the at least one sheet of sealable fabric (1) are sealed together.
